(19) **Europäisches Patentamt / European Patent Office / Office européen des brevets**

(11) **EP 3 891 883 B1**

(12) **EUROPÄISCHE PATENTSCHRIFT**

(45) Veröffentlichungstag und Bekanntmachung des Hinweises auf die Patenterteilung:
**19.03.2025 Patentblatt 2025/12**

(21) Anmeldenummer: **19817150.6**

(22) Anmeldetag: **28.11.2019**

(51) Internationale Patentklassifikation (IPC):
**H02P 21/00** (2016.01)   **H02P 21/14** (2016.01)
**H02P 29/50** (2016.01)   **G01M 13/025** (2019.01)
**H02P 23/14** (2006.01)   **H02P 23/16** (2016.01)
**H02P 23/00** (2016.01)

(52) Gemeinsame Patentklassifikation (CPC):
**H02P 29/50; H02P 21/0021; H02P 21/143;**
**H02P 23/0027; H02P 23/14; H02P 23/16;**
**Y02T 10/72**

(86) Internationale Anmeldenummer:
**PCT/EP2019/025422**

(87) Internationale Veröffentlichungsnummer:
**WO 2020/114626 (11.06.2020 Gazette 2020/24)**

(54) **VERFAHREN ZUM BETREIBEN EINES ANTRIEBSSTRANGES UND ANTRIEBSSTRANG**

METHOD FOR OPERATING A DRIVE TRAIN AND DRIVE TRAIN

PROCÉDÉ DE FONCTIONNEMENT D'UNE CHAINE CINÉMATIQUE ET CHAINE CINÉMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2018 DE 102018009518**

(43) Veröffentlichungstag der Anmeldung:
**13.10.2021 Patentblatt 2021/41**

(73) Patentinhaber: **SEW-EURODRIVE GmbH & Co. KG 76646 Bruchsal (DE)**

(72) Erfinder: **SCHUSTER, Thomas 73113 Ottenbach (DE)**

(56) Entgegenhaltungen:
EP-A1- 1 143 316    EP-A2- 2 690 777
EP-A2- 2 690 777    JP-A- H0 815 058

JP-B2- 3 479 922    JP-B2- 3 479 922
JP-B2- 3 479 922

- JOONAS SAINIO: "Backlash compensation in electric vehicle powertrain", MASTER'S THESIS ESPOO, 18 April 2016 (2016-04-18), XP055299894, Retrieved from the Internet <URL:https://aaltodoc.aalto.fi/bitstream/handle/123456789/20350/master_Sainio_Joonas_2016.pdf?sequence=1&isAllowed=y> [retrieved on 20160905]
- JOONAS SAINIO: "Backlash compensation in electric vehicle powertrain", MASTER'S THESIS ESPOO, 18 April 2016 (2016-04-18), XP055299894, Retrieved from the Internet <URL:https://aaltodoc.aalto.fi/bitstream/handle/123456789/20350/master_Sainio_Joonas_2016.pdf?sequence=1&isAllowed=y> [retrieved on 20160905]

**Beschreibung**

Die Erfindung betrifft ein Verfahren zum Betreiben eines Antriebsstranges und Antriebsstrang.

Es ist bei umrichtergespeisten Elektromotoren allgemein bekannt, dass die Signalelektronik den Istwert des Drehmoments aus dem erfassten Motorstrom, aus der Motorspannung und/oder aus dem Verlauf der erfassten Winkellage eines Elektromotors zu bestimmen.

Ebenso ist bei Umrichtern allgemein bekannt einem Elektromotor eine derartige Motorspannung zur Verfügung zu stellen, dass dieser zu einem Drehmomentsollwert hingeregelt wird.

Aus der DE 10 2007 028 914 A1 ist als nächstliegender Stand der Technik eine Einrichtung zum Steuern und/oder Regeln der Geschwindigkeit eines elektrischen Motors bekannt.

Aus der DE 691 20 486 T2 ist ein Verfahren zur Berechnung des Trägheitsmoments bei einem Motorgeschwindigkeitsregler bekannt.

Aus der EP 2 690 777 A2 als nächstliegender Stand der Technik Motorsteuerungsvorrichtung bekannt.

Aus der JP 3 479922 B2 ist eine Lastbestimmung bei einem elektromotorischen Antriebssystem bekannt.

Aus der XP055299894 ist eine Spielkompensation im Leistungsstrang eines Fahrzeugs bekannt.

Der Erfindung liegt daher die Aufgabe zugrunde, eine möglichst hohe Regelgüte beim Regeln eines Elektromotors zu erreichen.

Erfindungsgemäß wird die Aufgabe bei dem Verfahren nach den in Anspruch 1 und bei dem Antriebsstrang nach den in Anspruch 11 angegebenen Merkmalen gelöst.

Wichtige Merkmale der Erfindung bei dem Verfahren zum Betreiben eines Antriebsstranges sind, dass der Antriebsstrang einen Elektromotor und eine vom Elektromotor angetriebene oder von einem vom Elektromotor angetriebenen Getriebe angetriebene Last aufweist, wobei ein Sensor zur Erfassung der Winkellage eines Rotors des Elektromotors vorgesehen ist, insbesondere am Elektromotor angeordnet ist,

wobei mittels des Umrichters, insbesondere mittels eines Motorführungsmittels des Umrichters, dem Elektromotor zum Erreichen eines Drehmomentsollwerts M_Soll eine Motorspannung zur Verfügung gestellt wird,

wobei, insbesondere zeitlich wiederkehrend, aus den mittels des Sensors erfassten Werten der Winkellage des Rotors ein Winkelgeschwindigkeitsistwert $\omega$_ist und ein Winkelbeschleunigungsistwert $\alpha$_ist bestimmt wird,

wobei der Drehmomentsollwert M_Soll aus einem Trägheitsmoment J_ges und einem Winkelbeschleunigungssollwert $\alpha$_Soll bestimmt wird, welcher als Stellgröße von einem Drehzahlreglerglied bestimmt wird, dem die Differenz, insbesondere Regelabweichung, zwischen dem Winkelgeschwindigkeitsistwert $\omega$_ist und dem Winkelgeschwindigkeitssollwert w_Soll zugeführt wird,

wobei das Trägheitsmoment J_ges als Summe aus dem Trägheitsmoment J_Mot des Antriebsstrangs ohne Last und aus dem Trägheitsmoment J_Last der Last bestimmt wird,

wobei das Trägheitsmoment J_Last der Last aus einem Drehmomentistwert M_ist und aus dem Winkelbeschleunigungsistwert $\alpha$_ist bestimmt wird, insbesondere unter Berücksichtigung des Trägheitsmoments J_Mot.

Von Vorteil ist dabei, dass ein Regeln der Drehzahl und des Drehmoments der Last mit hoher Regelgüte ausführbar ist. Denn das Trägheitsmoment J_ges ist aus dem Quotienten des Drehmomentistwertes und des Winkelbeschleunigungsistwertes bestimmbar. Die Bestimmung des Drehmomentistwerts ist nach Stand der Technik aus dem Motorstrom und vorzugsweise einer weiteren Größe, wie Motorspannung und/oder Winkellage des Rotors des Elektromotors bestimmbar. Somit ist also der wirkliche Wert des Trägheitsmoments aktuell bestimmbar und für die Motorregelung, insbesondere also Drehzahlregelung, verwendbar. Die Motorführung ist ebenfalls nach Stand der Technik ausführbar, wobei der dort verwendete Parameter für das Trägheitsmoment erfindungsgemäß bestimmt wird. Somit ist bei Änderung des Antriebsstrangs, wie beispielsweise Veränderung des Trägheitsmoments der Last, das Trägheitsmoment bestimmbar und somit die Regelung mit einem jeweils aktuellen Wert des Trägheitsmoments ausführbar.

Bei einer vorteilhaften Ausgestaltung wird der Drehmomentistwert M_ist aus dem mittels eines Stromsensors erfassten Motorstrom und aus den erfassten Werten der Winkellage x des Rotors bestimmt. Von Vorteil ist dabei, dass ein nach Stand der Technik bekanntes Verfahren zur Bestimmung des Drehmomentistwertes M_ist anwendbar ist.

Bei einer vorteilhaften Ausgestaltung wird der Drehmomentistwert M_ist aus dem mittels eines Stromsensors erfassten Motorstrom und aus der erfassten Motorspannung U und/oder aus den erfassten Werten der Winkellage x des Rotors bestimmt. Von Vorteil ist dabei, dass ein nach Stand der Technik bekanntes Verfahren zur Bestimmung des Drehmomentistwertes M_ist anwendbar ist.

Bei einer vorteilhaften Ausgestaltung ist das Trägheitsmoment J_Mot des Antriebsstrangs ohne Last als Parameter vorgegeben. Von Vorteil ist dabei, dass bei Herstellung des Motors das Trägheitsmoment des Rotors des Motors hochgenau bestimmbar ist und somit J_Mot hochpräzise bekannt gemacht ist. Nur das lastseitige oder sonstige Trägheitsmoment ist also zu bestimmen, um einen sicheren Wert für das Trägheitsmoment zu erhalten.

Bei einer vorteilhaften Ausgestaltung wird der Drehmomentsollwert M_Soll als Produkt des Trägheitsmoments J_ges mit dem Winkelbeschleunigungssollwert $\alpha$_Soll gebildet. Von Vorteil ist dabei, dass eine einfache Bestimmung des Drehmoments ausführbar ist.

Bei einer vorteilhaften Ausgestaltung wird das Trägheitsmoment J_Last der Last als um das Trägheitsmoment J_Mot verminderter Quotient aus dem Drehmomentistwert M_ist und dem Winkelbeschleunigungsistwert $\alpha$_ist bestimmt. Von Vorteil ist dabei, dass ein aktuell vorhandener Wert des Trägheitsmoments der Last bestimmbar ist.

Bei einer vorteilhaften Ausgestaltung wird zu einem ersten Zeitpunkt das Trägheitsmoment J_Last der Last als um das Trägheitsmoment J_Mot verminderter erster Quotient aus dem Drehmomentistwert M_ist und dem Winkelbeschleunigungsistwert $\alpha$_ist bestimmt, wobei der Winkelbeschleunigungsistwert $\alpha$_ist in einem ersten Wertebereich liegt,

wobei nach dem ersten Zeitpunkt zu einem zweiten Zeitpunkt das Trägheitsmoment J_Last der Last als um das Trägheitsmoment J_Mot verminderter zweiter Quotient aus dem Drehmomentistwert M_ist und dem Winkelbeschleunigungsistwert $\alpha$_ist bestimmt wird, wobei der Winkelbeschleunigungsistwert $\alpha$_ist in einem zweiten Wertebereich liegt,

wobei ein aktualisiertes Trägheitsmoment J_Last bestimmt wird, indem auf den zuvor bestimmten Wert des Trägheitsmoments J_Last die Differenz zwischen dem zweiten und dem ersten Quotienten aufaddiert wird. Von Vorteil ist dabei, dass ein Nachführen, also Aktualisieren des Trägheitsmoments ausführbar ist.

Bei einer vorteilhaften Ausgestaltung ist der erste Bereich ein Wertebereich der Winkelbeschleunigung und der zweite Bereich ein anderer Wertebereich der Winkelbeschleunigung, wobei die beiden Wertebereiche einander nicht überlappen, sondern voneinander beabstandet sind. Von Vorteil ist dabei, dass bei genügend großem Abstand der Wertebereiche voneinander ein möglichst gutes Signal-Rausch-Verhältnis erreichbar ist und somit eine verlässliche Bestimmung des Wertes des Trägheitsmoments erreichbar ist.

Bei einer vorteilhaften Ausgestaltung werden die jeweils bestimmten Werte, insbesondere des Trägheitsmoments J_Last der Last, gefiltert, insbesondere tiefpassgefiltert. Von Vorteil ist dabei, dass das Messrauschen reduzierbar ist.

Bei einer vorteilhaften Ausgestaltung ist das Drehzahlreglerglied als PI-Regler ausgeführt,

wobei es ein Proportionalglied und ein zum Proportionalglied parallel geschaltetes Integrierglied aufweist,

wobei die Proportionalitätskonstante des Proportionalglieds eine Funktion des Trägheitsmoments J_Mot und des Gesamtträgheitsmoments J_ges ist,

wobei die Zeitkonstante des Integrierglieds eine Funktion des Trägheitsmoments J_Last und des Gesamtträgheitsmoments J_ges ist. Von Vorteil ist dabei, dass die Funktion so wählbar ist, dass ein Antriebsstrang mit Lose, insbesondere also mit einer spielbehafteten Verbindung, mit demselben Regelverhalten, insbesondere mit derselben Zeitkonstanten und mit derselben Einschwingcharakteristisch, betreibbar ist wie derselbe Antriebsstrang ohne die Lose, insbesondere also mit spielfreier Verbindung statt der spielbehafteten Verbindung. Außerdem reagiert das P-Glied entsprechend dem mit dem Rotor des Elektromotors spielfrei verbundenen Teils des Antriebsstrangs, so dass innerhalb der Lose entsprechend gutes Regelverhalten erreichbar ist.

Bei einer alternativen vorteilhaften Ausgestaltung ist das Drehzahlreglerglied als PI-Regler ausgeführt,

wobei es ein Proportionalglied und ein zum Proportionalglied parallel geschaltetes Integrierglied aufweist,

wobei die Proportionalitätskonstante des Proportionalglieds eine Funktion des Trägheitsmoments J_Last und des Gesamtträgheitsmoments J_ges ist,

wobei die Zeitkonstante des Integrierglieds eine Funktion des Trägheitsmoments J_Mot und des Gesamtträgheitsmoments J_ges ist. Von Vorteil ist dabei, dass die Funktion so wählbar ist, dass ein Antriebsstrang mit Lose, insbesondere also mit einer spielbehafteten Verbindung, mit ähnlichem Regelverhalten betreibbar ist wie derselbe Antriebsstrang ohne die Lose, insbesondere also mit spielfreier Verbindung statt der spielbehafteten Verbindung. Außerdem wird auch schon innerhalb der Lose ein Regelverhalten aktiviert, das im Wesentlichen auf das Lastträgheitsmoment abgestimmt ist, so dass der Übergang vom Bereich der Lose zum Bereich außerhalb der Lose ruckarm ausgeführt wird. Aber auch außerhalb der Lose ist infolge der kleinen Zeitkonstanten ein ruckarmes, stark geglättetes Verhalten ausführbar.

Erfindungsgemäß ist das Drehzahlreglerglied als PI-Regler ausgeführt,

wobei es ein Proportionalglied und ein zum Proportionalglied parallel geschaltetes Integrierglied aufweist,
wobei die Proportionalitätskonstante des Proportionalglieds eine Funktion des Produkts aus Trägheitsmoment J_Mot und Trägheitsmoment J_Last der Last ist,
und/oder wobei die Zeitkonstante des Integrierglieds eine Funktion des Produkts aus Trägheitsmoment J_Mot und Trägheitsmoment J_Last der Last ist. Von Vorteil ist dabei, dass ein optimiertes Ausregeln der Lose erreichbar ist, da Trägheitsmoment J_Mot und Trägheitsmoment J_Last der Last separat bestimmt sind und miteinander multipliziert verwendet werden.

Wichtige Merkmale bei dem Antriebsstrang sind, dass er eingerichtet ist, ein vorgenanntes Verfahren auszuführen. Von Vorteil ist dabei, dass eine Regelung der Drehung der Last mit hoher Regelgüte ausführbar ist.
Weitere Vorteile ergeben sich aus den Unteransprüchen. Die Erfindung ist nicht auf die Merkmalskombination der Ansprüche beschränkt.
Die Erfindung wird nun anhand von schematischen Abbildungen näher erläutert:

In der Figur 1 ist ein Mittel 1 zur Bestimmung des Drehmomentistwertes M_ist schematisch dargestellt, welches aus dem Motorstrom I und der Winkelposition x einen Istwert M_ist für Drehmoment M_ist bestimmt.

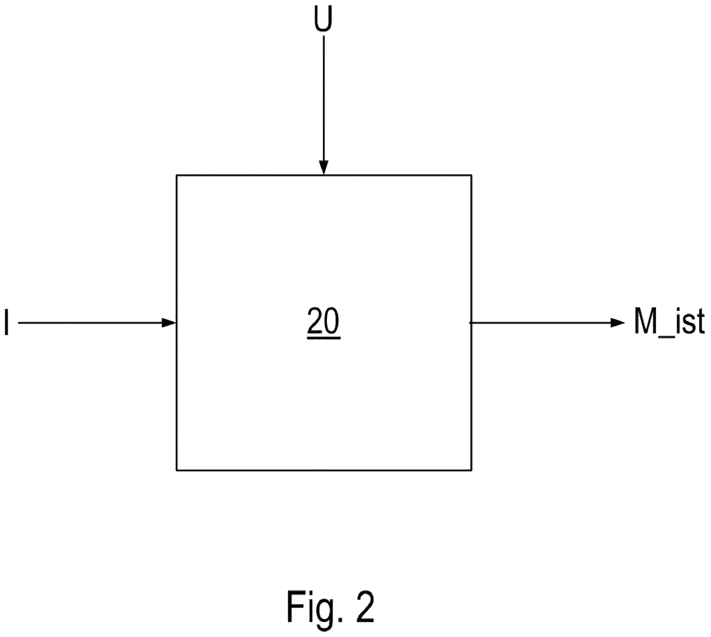

In der Figur 2 ist ein alternatives ein Mittel 20 zur Bestimmung des Drehmomentistwertes M_ist schematisch dargestellt, welches aus dem Motorstrom I und der Motorspannung U einen Istwert M_ist für Drehmoment bestimmt.

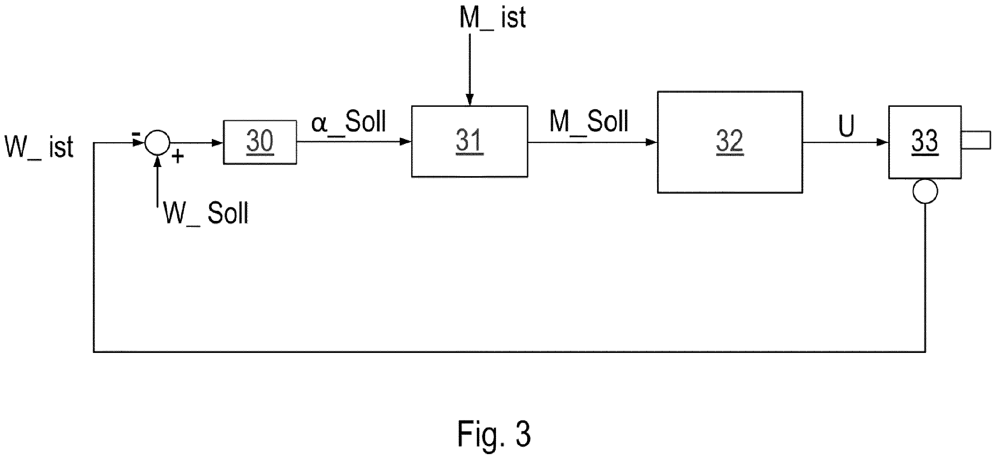

In der Figur 3 ist erfindungsgemäß ein Drehzahlreglerglied 30 gezeigt, aus dessen Stellwert $\alpha$_Soll, insbesondere also aus einem Sollwert $\alpha$_Soll für Winkelbeschleunigung, unter Verwendung des Drehmomentistwertes M_ist ein Drehmomentsollwert M_Soll bestimmt wird, der einer Motorführung vorgegeben wird, welche einem Elektromotor 33 eine Motorspannung U zur Verfügung stellt.

In der Figur 4 ist ein beispielhafter Drehzahlregler zur Bestimmung des Drehmomentsollwerts M_Soll dargestellt, wobei ein Proportionalglied die Proportionalitätskonstante Kp1 aufweist und ein Integrierglied den charakteristischen Parameter Tn1 und wobei die Werte kp1 und Tn1 derart gewählt sind, dass ein gewünschtes Verhalten, wie Zeitkonstante und Einschwingcharakteristik, für einen spielfreien Antriebsstrang mit einem konstanten Gesamtträgheitsmoment vorliegt.

In der Figur 5 ist im Unterschied zur Figur 4 der Antriebsstrang mit Spiel, also Lose, behaftet und die Proportionalitätskonstante Kp2 des Proportionalglieds der charakteristische Parameter Tn2 des Integrierglieds derart gewählt sind, dass ein möglichst ähnliches Verhalten wie bei Figur 4 vorliegt.

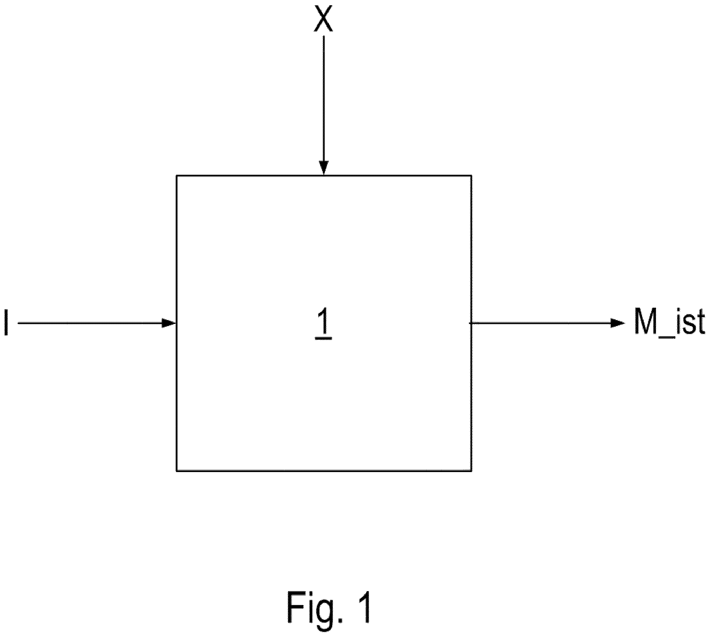

Wie in den Figuren dargestellt, wird bei einem erfindungsgemäßen Verfahren zur Motorregelung einem Elektromotor 33, der vorzugsweise als Drehstrommotor ausgeführt ist, von einem Wechselrichter eine Motorspannung U bereitgestellt, insbesondere eine Drehspannung.
Mittels eines Sensors wird die Winkellage einer Rotorwelle des Elektromotors 33 erfasst und als Istwert x_ist einem Drehzahlregler zugeführt, welcher aus der Regelabweichung des Istwertes x_ist zu einem insbesondere als Parameter vorgegebenen Sollwert x_Soll einen Wert einer Stellgröße bestimmt.
Wie in Figur 1 dargestellt, ist die Stellgröße vorzugsweise als Sollwert $\alpha$_Soll für Winkelbeschleunigung vorgesehen.
Diese Stellgröße wird dem Mittel 31 zur Bestimmung des Drehmomentsollwertes M_Soll zugeführt, welches unter Berücksichtigung des Drehmomentistwertes M_ist den Drehmomentsollwert M_Soll bestimmt.
Dieser wird dem Motorführungsmittel 32 als Sollwert zugeführt, wobei das Motorführungsmittel 32 abhängig von diesem Sollwert dem Elektromotor 33 eine Motorspannung U zur Verfügung stellt.
Die Winkellage, also Winkelposition x, des Rotors des Elektromotors 33 wird von einem Sensor erfasst, daraus der Drehzahlistwert w_ist bestimmt und die Differenz zwischen dem Drehzahlsollwert $\omega$_Soll und dem Drehzahlistwert w_ist als Regelabweichung dem Drehzahlreglerglied 30 zugeführt, das vorzugsweise als linearer Regler, wie PI-Regler oder PID-Regler, ausgeführt ist.
Zur Bestimmung des Drehmomentsollwertes M_Soll wird im Mittel 31 zunächst das Trägheitsmoment J_Last der vom Elektromotor 33 angetriebenen Last bestimmt gemäß

$$J\_Last = M\_ist / (d\omega\_ist / dt) - J\_mot$$

Dabei ist J_mot das als Parameter des Elektromotors bekannte Trägheitsmoment des Rotors des Elektromotors 33 und dω_ist / dt die zeitliche Ableitung der aus den erfassten Winkelwerten bestimmten Winkelgeschwindigkeit. Außerdem ist der Drehmomentistwert M_ist vom Mittel 1 zur Bestimmung des Drehmomentistwertes oder vom Mittel 20 zur Bestimmung des Drehmomentistwertes bestimmt.

Aus dem bestimmten Trägheitsmoment J_Last und dem als Parameter vorhandenen Trägheitsmoment J_Mot ist das gesamte Trägheitsmoment J_ges, also die Gesamtmassenträgheit; durch Summation J_ges = J_Mot + J_Last bestimmbar.

Dies wird zur Bestimmung des Drehmomentsollwertes M_Soll verwendet gemäß

$$M\_Soll = J\_ges * \alpha\_Soll$$

Somit ist durch einfache Multiplikation des gesamten Trägheitsmoments J_ges mit der Stellgröße α_Soll des Drehzahlreglerglieds 30 der Drehmomentsollwert M_Soll bestimmt.

Erfindungsgemäß steht somit der Regelung immer die korrekte Lastmassenträgheit zur Verfügung, weil sie während des Betriebs nachführbar ist

Bei einem anderen Ausführungsbeispiel, wenn neben dem Drehmoment zum Beschleunigen des Antriebs ein zusätzliches Drehmoment, wie beispielsweise Lastmoment, also ein von der Last in den Antriebsstrang eingebrachtes Drehmoment, oder ein Reibmoment, auftritt, werden zur Bestimmung der Änderung ΔJ_Last des Trägheitsmoments zwei Bereiche mit unterschiedlichen Beschleunigungen herangezogen gemäß:

$$\Delta J\_Last = M\_ist\_1 / (d\omega\_ist\_1 / dt) - M\_ist\_2 / (d\omega\_ist\_2 / dt)$$

wobei dw_ist_1 / dt die zeitliche Ableitung der Winkelgeschwindigkeit, also die Winkelbeschleunigung, ist, welche im ersten Bereich liegt, wobei M_ist_1 der zugehörige Drehmomentistwert ist,

wobei dω_ist_2 / dt die zeitliche Ableitung der Winkelgeschwindigkeit, also die Winkelbeschleunigung, ist, welche im zweiten Bereich liegt, wobei M_ist_2 der zugehörige Drehmomentistwert ist.

Das Trägheitsmoment J_Mot des Rotors des Elektromotors ist dabei konstant, so dass die Änderung ΔJ_ges des gesamten Trägheitsmoments J_ges der Änderung ΔJ_Last des Trägheitsmoments J_Last der Last entspricht.

Dabei ist der erste Bereich ein Wertebereich der Winkelbeschleunigung und der zweite Bereich ist ein anderer Wertebereich der Winkelbeschleunigung, wobei die beiden Wertebereiche nicht miteinander überlappen und voneinander beabstandet sind.

Die Bestimmung des Drehmomentistwertes M_ist_1 und der Winkelbeschleunigung dw_ist_1 / dt aus dem ersten Bereich erfolgt zeitlich beabstandet zur Bestimmung des Drehmomentistwertes M_ist_2 und der Winkelbeschleunigung dw_ist_2 / dt aus dem zweiten Bereich.

Somit ist das Trägheitsmoment J_Last der Veränderung nachführbar.

Beispielsweise beschleunigt der Antrieb eine Last in einem ersten Zeitabschnitt, wobei ein erster Beschleunigungswert auftritt. In einem nachfolgenden Zeitabschnitt wird die Drehzahl des Motors konstant gehalten und in einem darauffolgenden dritten Zeitabschnitt wird die Last abgebremst, so dass also ein zweiter Beschleunigungswert auftritt. Der zweite Beschleunigungswert darf betragsgleich zum ersten Beschleunigungswert sein.

Somit ist aus einem solchen Fahrvorgang die Bestimmung des Trägheitsmoments J_Last der Last ausführbar, wobei der Einfluss von Reibung eliminiert ist.

Auf diese Weise ist also im laufenden Betrieb der den Antrieb umfassenden Anlage das Trägheitsmoment bestimmbar, insbesondere nachführbar. Immer wenn die Beschleunigung im ersten Bereich oder im zweiten Bereich liegt, ist der jeweilige Quotient aus dem zugehörigen Drehmomentistwert und der Winkelbeschleunigung aktualisierbar.

Auch wenn sich also die Lastmassenträgheit während des Betriebs ändert, ist das Trägheitsmoment J_Last und somit das gesamte Trägheitsmoment des die Last und den Rotor umfassenden Antriebsstrangs aktualisierend bestimmbar.

Dabei wird unter Antriebsstrang der vom Umrichter gespeiste Elektromotor 33 zusammen mit der vom Elektromotor 33 gegebenenfalls über ein Getriebe angetriebene Last verstanden.

Bei weiteren erfindungsgemäßen Ausführungsbeispielen wird der Werteverlauf des Lastträgheitsmoments noch geeignet gefiltert um durch ein Rauschen der Messgrößen verursachtes Rauschen zu reduzieren.

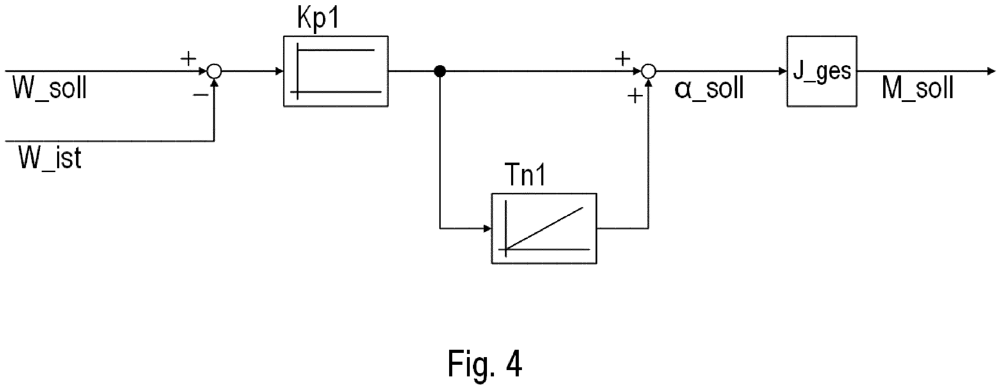

Wie in Figur 4 gezeigt, sind die Werte Kp1 und Tn1 derart gewählt, dass das gewünschte Verhalten auftritt, wenn der Antriebsstrang keine Lose, also auch kein Spiel, aufweist. Das vom Elektromotor anzutreibende Trägheitsmoment beträgt hierbei J_ges.

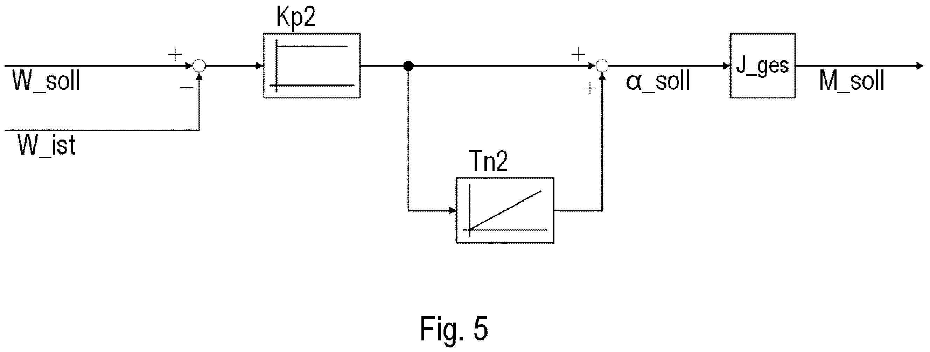

Wie in Figur 5 gezeigt, sind andere Werte verwendbar, die bei einem Antriebsstrang mit Lose, also mit Spiel, dasselbe Verhalten wie bei der Ausführung nach Figur 4 bewirken. Als Wert der Proportionalitätskonstante des Proportionalglieds wird hier Kp2 verwendet und als Zeitkonstante des Integrierglieds wird Tn2 verwendet.

Insbesondere wird ein stabiles Regelverhalten erreichbar, wenn

$$Kp2 = Kp1 * J\_Mot / (J\_Mot + J\_Last)$$

$$Tn2 = Tn1 * (J\_Mot + J\_Last) / J\_Mot$$

Gilt.

Dabei gleicht das Gesamtträgheitsmoment J_ges der Summe aus J_Mot und J_Last, wobei hier das Trägheitsmoment J_Mot denjenigen drehbar gelagerten Teil des Antriebsstrangs betrifft, welcher den Rotor des Elektromotors des Antriebsstrangs bis zu der spielbehafteten Verbindung, insbesondere bis zu der Lose, des Antriebsstrangs beschreibt und J_Last den restlichen Teil des Antriebsstrangs.

Erfindungsgemäß wird J_Last bestimmt und somit ein Anpassen der Werte ermöglicht.

Bei weiteren erfindungsgemäßen Ausführungsbeispielen werden Werte verwendet gemäß

$$Kp2 = Kp1 * f (J\_Mot, J\_ges)$$

$$Tn2 = Tn1 * g (J\_Last, J\_ges)$$

wobei f und g Funktionen sind.

Somit ist die separate Bestimmung von J_Last und J_Mot notwendig. Hierzu ist in einem ersten Verfahrensschritt J_Mot bestimmbar, indem bei nicht vorhandener beziehungsweise nicht an die Rotorwelle des Elektromotors des Antriebsstrangs angekoppelter Last J_Mot bestimmt wird gemäß $M\_ist\_1 / (d\omega\_ist\_1 / dt)$. In einem zweiten Verfahrensschritt wird dann das Lastträgheitsmoment J_Last bestimmt gemäß

$$M\_ist\_1 / (d\omega\_ist\_1 / dt) - M\_ist\_2 / (d\omega\_ist\_2 / dt)$$

Spätere Änderungen des Lastträgheitsmoments J_Last sind dann in weiteren Verfahrensschritten entsprechend bestimmbar, also der Wert des Lastträgheitsmoments J_Last nachführbar.

Bei weiteren erfindungsgemäßen Ausführungsbeispielen werden Werte verwendet gemäß

$$Kp2 = Kp1 * f (J\_Last, J\_ges)$$

$$Tn2 = Tn1 * g (J\_Mot, J\_ges)$$

wobei f und g Funktionen sind.

Somit ist die separate Bestimmung von J_Last und J_Mot notwendig. Hierzu ist in einem ersten Verfahrensschritt J_Mot bestimmbar, indem bei nicht vorhandener beziehungsweise nicht an die Rotorwelle des Elektromotors des Antriebsstrangs angekoppelter Last J_Mot bestimmt wird gemäß $M\_ist\_1 / (d\omega\_ist\_1 / dt)$. In einem zweiten Verfahrensschritt wird dann das Lastträgheitsmoment J_Last bestimmt gemäß

$$M\_ist\_1 / (d\omega\_ist\_1 / dt) - M\_ist\_2 / (d\omega\_ist\_2 / dt)$$

Spätere Änderungen des Lastträgheitsmoments J_Last sind dann in weiteren Verfahrensschritten entsprechend bestimmbar, also der Wert des Lastträgheitsmoments J_Last nachführbar.

Bei weiteren erfindungsgemäßen Ausführungsbeispielen werden Werte verwendet gemäß

$$Kp2 = Kp1 * f (J\_Mot \times J\_Last)$$

$$Tn2 = Tn1 * g (J\_Mot \times J\_Last)$$

wobei f und g Funktionen sind und somit vom Produkt der beiden Trägheitsmomente abhängen.

Somit ist die separate Bestimmung von J_Last und J_Mot notwendig. Hierzu ist in einem ersten Verfahrensschritt J_Mot bestimmbar, indem bei nicht vorhandener beziehungsweise nicht an die Rotorwelle des Elektromotors des Antriebsstrangs angekoppelter Last J_Mot bestimmt wird gemäß M_ist_1 / (dω_ist_1 / dt). In einem zweiten Verfahrensschritt wird dann das Lastträgheitsmoment J_Last bestimmt gemäß

$$M\_ist\_1 / (d\omega\_ist\_1 / dt) - M\_ist\_2 / (d\omega\_ist\_2 / dt)$$

Spätere Änderungen des Lastträgheitsmoments J_Last sind dann in weiteren Verfahrensschritten entsprechend bestimmbar, also der Wert des Lastträgheitsmoments J_Last nachführbar.

Bezugszeichenliste

1 Mittel zur Bestimmung des Drehmomentistwertes
20 Mittel zur Bestimmung des Drehmomentistwertes
30 Drehzahlregler
31 Mittel zur Bestimmung des Drehmomentsollwertes
32 Motorführungsmittel
33 Elektromotor, insbesondere Drehstrommotor
I Motorstrom, insbesondere Motorstromraumzeiger
U Motorspannung, insbesondere Motorspannungsraumzeiger
X Winkelposition
ω_ist Istwert der Winkelgeschwindigkeit
ω_Soll Sollwert der Winkelgeschwindigkeit
α_Soll Sollwert für Winkelbeschleunigung
M_ist Istwert des Drehmoments

**Patentansprüche**

1. Verfahren zum Betreiben eines Antriebsstranges,

wobei der Antriebsstrang einen Elektromotor (33) und eine vom Elektromotor (33) angetriebene oder von einem vom Elektromotor (33) angetriebenen Getriebe angetriebene Last aufweist, wobei ein Sensor zur Erfassung der Winkellage eines Rotors des Elektromotors (33) vorgesehen ist, insbesondere am Elektromotor (33) angeordnet ist,
wobei mittels des Umrichters, insbesondere mittels eines Motorführungsmittels (32) des Umrichters, dem Elektromotor (33) zum Erreichen eines Drehmomentsollwerts M_Soll eine Motorspannung zur Verfügung gestellt wird,
wobei, insbesondere zeitlich wiederkehrend, aus den mittels des Sensors erfassten Werten der Winkellage des Rotors ein Winkelgeschwindigkeitsistwert ω_ist und ein Winkelbeschleunigungsistwert α_ist bestimmt wird,
wobei der Drehmomentsollwert M_Soll aus einem Trägheitsmoment J_ges und einem Winkelbeschleunigungssollwert α_Soll bestimmt wird, wobei der Winkelbeschleunigungssollwert α_Soll als Stellgröße von einem Drehzahlreglerglied (30) bestimmt wird, dem die Differenz, insbesondere Regelabweichung, zwischen dem Winkelgeschwindigkeitsistwert ω_ist und dem Winkelgeschwindigkeitssollwert w_Soll zugeführt wird,
wobei das Trägheitsmoment J_ges als Summe aus dem Trägheitsmoment J_Mot des Antriebsstrangs ohne Last und aus dem Trägheitsmoment J_Last der Last bestimmt wird,
wobei das Trägheitsmoment J_Last der Last aus einem Drehmomentistwert M_ist und aus dem Winkelbeschleunigungsistwert α_ist bestimmt wird, insbesondere unter Berücksichtigung des Trägheitsmoments J_Mot,
**dadurch gekennzeichnet, dass**
das Drehzahlreglerglied (30) als PI-Regler ausgeführt ist,
wobei es ein Proportionalglied und ein zum Proportionalglied parallel geschaltetes Integrierglied aufweist,
wobei die Proportionalitätskonstante des Proportionalglieds eine Funktion des Produkts aus Trägheitsmoment J_Mot und Trägheitsmoment J_Last der Last ist,
und/oder wobei die Zeitkonstante des Integrierglieds eine Funktion des Produkts aus Trägheitsmoment J_Mot und Trägheitsmoment J_Last der Last ist.

2. Verfahren nach Anspruch 1,
   **dadurch gekennzeichnet, dass**

   der Drehmomentistwert M_ist aus dem mittels eines Stromsensors erfassten Motorstrom und aus den erfassten Werten der Winkellage x des Rotors bestimmt wird,
   oder dass
   der Drehmomentistwert M_ist aus dem mittels eines Stromsensors erfassten Motorstrom und aus der erfassten Motorspannung U und/oder aus den erfassten Werten der Winkellage x des Rotors bestimmt wird.

3. Verfahren nach einem der vorangegangenen Ansprüche,
   **dadurch gekennzeichnet, dass**
   das Trägheitsmoment J_Mot des Antriebsstrangs ohne Last als Parameter vorgegeben ist.

4. Verfahren nach einem der vorangegangenen Ansprüche,
   **dadurch gekennzeichnet, dass**
   der Drehmomentsollwert M_Soll als Produkt des Trägheitsmoments J_ges mit dem Winkelbeschleunigungssollwert α_Soll gebildet wird.

5. Verfahren nach einem der vorangegangenen Ansprüche,
   **dadurch gekennzeichnet, dass**
   das Trägheitsmoment J_Last der Last als um das Trägheitsmoment J_Mot verminderter Quotient aus dem Drehmomentistwert M_ist und dem Winkelbeschleunigungsistwert α_ist bestimmt wird.

6. Verfahren nach einem der Ansprüche 1 bis 5,
   **dadurch gekennzeichnet, dass**

   das Drehzahlreglerglied (30) als PI-Regler ausgeführt ist,
   wobei es ein Proportionalglied und ein zum Proportionalglied parallel geschaltetes Integrierglied aufweist,
   wobei die Proportionalitätskonstante des Proportionalglieds eine Funktion des Trägheitsmoments J_Mot und des Gesamtträgheitsmoments J_ges ist,
   wobei die Zeitkonstante des Integrierglieds eine Funktion des Trägheitsmoments J_Last und des Gesamtträgheitsmoments J_ges ist.

7. Verfahren nach einem der Ansprüche 1 bis 5, **dadurch gekennzeichnet, dass**

   das Drehzahlreglerglied (30) als PI-Regler ausgeführt ist,
   wobei es ein Proportionalglied und ein zum Proportionalglied parallel geschaltetes Integrierglied aufweist,
   wobei die Proportionalitätskonstante des Proportionalglieds eine Funktion des Trägheitsmoments J_Last und des Gesamtträgheitsmoments J_ges ist,
   wobei die Zeitkonstante des Integrierglieds eine Funktion des Trägheitsmoments J_Mot und des Gesamtträgheitsmoments J_ges ist.

8. Verfahren nach einem der Ansprüche 1 bis 7, **dadurch gekennzeichnet, dass**

   zu einem ersten Zeitpunkt das Trägheitsmoment J_Last der Last als um das Trägheitsmoment J_Mot verminderter erster Quotient aus dem Drehmomentistwert M_ist und dem Winkelbeschleunigungsistwert α_ist bestimmt wird, wobei der Winkelbeschleunigungsistwert α_ist in einem ersten Wertebereich liegt,
   wobei nach dem ersten Zeitpunkt zu einem zweiten Zeitpunkt das Trägheitsmoment J_Last der Last als um das Trägheitsmoment J_Mot verminderter zweiter Quotient aus dem Drehmomentistwert M_ist und dem Winkelbeschleunigungsistwert α_ist bestimmt wird, wobei der Winkelbeschleunigungsistwert α_ist in einem zweiten Wertebereich liegt,
   wobei ein aktualisiertes Trägheitsmoment J_Last bestimmt wird, indem auf den zuvor bestimmten Wert des Trägheitsmoments J_Last die Differenz zwischen dem zweiten und dem ersten Quotienten aufaddiert wird.

9. Verfahren nach Anspruch 8, **dadurch gekennzeichnet, dass**

der erste Bereich ein Wertebereich der Winkelbeschleunigung und der zweite Bereich ein anderer Wertebereich der Winkelbeschleunigung ist,
wobei die beiden Wertebereiche einander nicht überlappen, sondern voneinander beabstandet sind.

10. Verfahren nach einem der vorangegangenen Ansprüche, **dadurch gekennzeichnet, dass**
die jeweils bestimmten Werte, insbesondere des Trägheitsmoments J_Last der Last, gefiltert werden, insbesondere tiefpassgefiltert.

11. Antriebsstrang, eingerichtet ein Verfahren nach einem der vorangegangenen Ansprüche auszuführen.

**Claims**

1. Method for operating a drivetrain,

   the drivetrain having an electric motor (33) and a load that is driven by the electric motor (33) or driven by a gearing driven by the electric motor (33), a sensor for detecting the angular position of a rotor of the electric motor (33) being provided, in particular being arranged on the electric motor (33),
   a motor voltage being made available to the electric motor (33) by means of the converter, in particular by means of a motor commutation means (32) of the converter, in order to achieve a desired torque value M_Soll,
   an actual angular velocity value w_ist and an actual angular acceleration value $\alpha$_ist being determined, in particular recurrently over time, from the values of the angular position of the rotor that are detected by means of the sensor,
   the desired torque value M_Soll being determined from a moment of inertia J_ges and a desired angular acceleration value $\alpha$_Soll, the desired angular acceleration value $\alpha$_Soll being determined as a manipulated variable by a speed controller member (30), to which the difference, in particular the control error, between the actual angular velocity value w_ist and the desired angular velocity value w_Soll is supplied,
   the moment of inertia J_ges being determined as the sum of the moment of inertia J_Mot of the drivetrain without a load and the moment of inertia J_Last of the load,
   the moment of inertia J_Last of the load being determined from an actual torque value M_ist and the actual angular acceleration value $\alpha$_ist, in particular while taking into account the moment of inertia J_Mot,
   **characterised in that**
   the speed controller member (30) is configured as a PI controller,
   said controller member having a proportional control unit and an integrator wired in parallel with the proportional control unit,
   the proportionality constant of the proportional control unit being a function of the product of the moment of inertia J_Mot and the moment of inertia J_Last of the load,
   and/or the time constant of the integrator being a function of the product of the moment of inertia J_Mot and the moment of inertia J_Last of the load.

2. Method according to claim 1, **characterised in that**

   the actual torque value M_ist is determined from the motor current detected by means of a current sensor and the detected values of the angular position x of the rotor,
   or **in that**
   the actual torque value M_ist is determined from the motor current detected by means of a current sensor and the detected motor voltage U and/or the detected values of the angular position x of the rotor.

3. Method according to any of the preceding claims, **characterised in that**
   the moment of inertia J_Mot of the drivetrain without a load is specified as a parameter.

4. Method according to any of the preceding claims, **characterised in that**
   the desired torque value M_Soll is formed as a product of the moment of inertia J_ges and the desired angular acceleration value $\alpha$_Soll.

5. Method according to any of the preceding claims, **characterised in that**
   the moment of inertia J_Last of the load is determined as a ratio of the actual torque value M_ist and the actual angular acceleration value $\alpha$_ist minus the moment of inertia J_Mot.

6. Method according to any of claims 1 to 5,
   **characterised in that**

   the speed controller member (30) is configured as a PI controller,
   said controller member having a proportional control unit and an integrator wired in parallel with the proportional control unit,
   the proportionality constant of the proportional control unit element being a function of the moment of inertia J_Mot and the total moment of inertia J_ges,
   the time constant of the integrator being a function of the moment of inertia J_Mot and the total moment of inertia J_ges.

7. Method according to any of claims 1 to 5, **characterised in that**

   the speed controller member (30) is configured as a PI controller,
   said controller member having a proportional control unit and an integrator wired in parallel with the proportional control unit,
   the proportionality constant of the proportional control unit being a function of the moment of inertia J_Last and the total moment of inertia J_ges,
   the time constant of the integrator being a function of the moment of inertia J_Mot and the total moment of inertia J_ges.

8. Method according to any of claims 1 to 7,
   **characterised in that**

   at a first time, the moment of inertia J_Last of the load is determined as a first ratio of the actual torque value M_ist and the actual angular acceleration value $\alpha$_ist minus the moment of inertia J_Mot, the actual angular acceleration value $\alpha$_ist being in a first value range, after the first time, at a second time, the moment of inertia J_Last of the load being determined as a second ratio of the actual torque value M_ist and the actual angular acceleration value $\alpha$_ist minus the moment of inertia J_Mot, the actual angular acceleration value $\alpha$_ist being in a second value range,
   an updated moment of inertia J_Last being determined by adding the difference between the second and first ratios to the previously determined value of the moment of inertia J_Last.

9. Method according to claim 8, **characterised in that**

   the first range is an angular acceleration value range and the second range is a different angular acceleration value range,
   the two value ranges not overlapping with one another but being separate from one another.

10. Method according to any of the preceding claims, **characterised in that**
    each determined value, in particular of the moment of inertia J_Last of the load, is filtered, in particular low-pass filtered.

11. Drivetrain configured to carry out a method according to any of the preceding claims.


**Revendications**

1. Procédé de fonctionnement d'une chaîne cinématique,

   la chaîne cinématique présentant un moteur électrique (33) et une charge entraînée par le moteur électrique (33) ou entraînée par une transmission entraînée par le moteur électrique (33), un capteur permettant de détecter la position angulaire d'un rotor du moteur électrique (33) étant prévu, en particulier étant agencé au niveau du moteur électrique (33),
   une tension de moteur étant fournie au moteur électrique (33) au moyen du convertisseur, en particulier au moyen d'un moyen de guidage de moteur (32) du convertisseur afin d'atteindre une valeur de consigne de couple M_Soll,
   une valeur réelle de vitesse angulaire w_ist et une valeur réelle d'accélération angulaire $\alpha$_ist étant déterminées, en particulier de manière récurrente dans le temps, à partir des valeurs de la position angulaire du rotor détectées par le capteur,
la valeur de consigne de couple M_Soll étant déterminée à partir d'un moment d'inertie J_ges et d'une valeur de consigne d'accélération angulaire α_Soll, la valeur de consigne d'accélération angulaire α_Soll étant déterminée sous la forme d'une grandeur de réglage par un élément de régulation de vitesse de rotation (30) vers lequel est acheminée la différence, en particulier l'écart de régulation, entre la valeur réelle de vitesse angulaire ω_ist et la valeur de consigne de vitesse angulaire ω_Soll, le moment d'inertie J_ges étant déterminé sous la forme d'une somme du moment d'inertie J_Mot de la chaîne cinématique sans charge et du moment d'inertie J_Last de la charge,
le moment d'inertie J_Last de la charge étant déterminé à partir d'une valeur réelle de couple M_ist et de la valeur réelle d'accélération angulaire α_ist, en particulier en tenant compte du moment d'inertie J_Mot,
**caractérisé en ce que**
l'élément de régulation de vitesse de rotation (30) est conçu comme un régulateur PI,
un élément proportionnel et un élément d'intégration connecté en parallèle par rapport à l'élément proportionnel étant présents,
la constante de proportionnalité de l'élément proportionnel étant une fonction du produit du moment d'inertie J_Mot et du moment d'inertie J_Last de la charge,
et/ou la constante de temps de l'élément d'intégration étant une fonction du produit du moment d'inertie J_Mot et du moment d'inertie J_Last de la charge.

2. Procédé selon la revendication 1, **caractérisé en ce que**

la valeur réelle de couple M_ist est déterminée à partir du courant de moteur détecté au moyen d'un capteur de courant et à partir des valeurs détectées de la position angulaire x du rotor,
ou **en ce que**
la valeur réelle de couple M_ist est déterminée à partir du courant de moteur détecté au moyen d'un capteur de courant et à partir de la tension de moteur U détectée et/ou à partir des valeurs détectées de la position angulaire x du rotor.

3. Procédé selon l'une quelconque des revendications précédentes,
**caractérisé en ce que**
le moment d'inertie J_Mot de la chaîne cinématique sans charge est spécifié sous forme de paramètre.

4. Procédé selon l'une quelconque des revendications précédentes,
**caractérisé en ce que**
la valeur de couple M_Soll est formée en tant que produit du moment d'inertie J_ges et de la valeur de consigne d'accélération angulaire α_Soll.

5. Procédé selon l'une quelconque des revendications précédentes,
**caractérisé en ce que**
le moment d'inertie J_Last de la charge est déterminé sous la forme du quotient qui est calculé à partir de la valeur réelle de couple M_ist et de la valeur réelle d'accélération angulaire α_ist et diminué du moment d'inertie J_mot.

6. Procédé selon l'une quelconque des revendications 1 à 5,
**caractérisé en ce que**

l'élément de régulation de vitesse de rotation (30) est conçu comme un régulateur PI, un élément proportionnel et un élément d'intégration connecté en parallèle par rapport à l'élément proportionnel étant présents,
la constante de proportionnalité de l'élément proportionnel étant une fonction du moment d'inertie J_Mot et du moment d'inertie total J_ges,
la constante de temps de l'élément d'intégration étant une fonction du moment d'inertie J_Last et du moment d'inertie total J_ges.

7. Procédé selon l'une quelconque des revendications 1 à 5,
**caractérisé en ce que**

l'élément de régulation de vitesse de rotation (30) est conçu comme un régulateur PI, un élément proportionnel et un élément d'intégration connecté en parallèle par rapport à l'élément proportionnel étant présents,
la constante de proportionnalité de l'élément proportionnel étant une fonction du moment d'inertie J_Last et du moment d'inertie total J_ges.

la constante de temps de l'élément d'intégration étant une fonction du moment d'inertie J_Mot et du moment d'inertie total J_ges.

8. Procédé selon l'une quelconque des revendications 1 à 7, **caractérisé en ce que**

à un premier instant, le moment d'inertie J_Last de la charge est déterminé sous la forme d'un premier quotient qui est calculé à partir de la valeur réelle de couple M_ist de la valeur réelle d'accélération angulaire $\alpha$_ist et diminué du moment d'inertie J_Mot, la valeur réelle d'accélération angulaire $\alpha$_ist étant située dans une première plage de valeurs,

après le premier instant et à un deuxième instant, le moment d'inertie J_Last de la charge est déterminé sous la forme d'un deuxième quotient qui est calculé à partir de la valeur réelle de couple M_ist et de la valeur réelle d'accélération angulaire $\alpha$_ist et diminué du moment d'inertie J_Mot, la valeur réelle d'accélération angulaire $\alpha$_ist étant située dans une deuxième plage de valeurs,

un moment d'inertie J_Last mis à jour étant déterminé en additionnant la différence entre le deuxième et le premier quotient à la valeur précédemment déterminée du moment d'inertie J_Last.

9. Procédé selon la revendication 8, **caractérisé en ce que**

la première plage est une plage de valeurs de l'accélération angulaire et la deuxième plage est une autre plage de valeurs de l'accélération angulaire,

les deux plages de valeurs ne se chevauchant pas, mais étant espacées l'une de l'autre.

10. Procédé selon l'une quelconque des revendications précédentes, **caractérisé en ce que**
les valeurs respectivement déterminées, en particulier le moment d'inertie J_Last de la charge, étant filtrées, en particulier étant soumises à un filtre passe-bas.

11. Chaîne cinématique conçue pour mettre en œuvre un procédé selon l'une quelconque des revendications précédentes.

X

I → [ 1 ] → M_ist

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007028914 A1
- DE 69120486 T2
- EP 2690777 A2
- JP 3479922 B